(19) Europäisches Patentamt
European Patent Office
Office européen des brevets

(11) EP 2 926 889 A1

(12) EUROPEAN PATENT APPLICATION

(43) Date of publication:
07.10.2015 Bulletin 2015/41

(51) Int Cl.:
*B01D 67/00* (2006.01) *B01D 71/68* (2006.01)
*C08J 5/22* (2006.01)

(21) Application number: 14305492.2

(22) Date of filing: 04.04.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Solvay Specialty Polymers Italy S.p.A.**
  **20021 Bollate (MI) (IT)**
- **Rhodia Operations**
  **93306 Aubervilliers Cedex (FR)**

(72) Inventors:
- **DI NICOLO, Emanuele**
  **20037 Paderno Dugnano (MI) (IT)**
- **BOURDETTE, Arnaud**
  **77500 Chelles (FR)**
- **LANSON, David**
  **92120 Montrouge (FR)**
- **SANGUINETI, Aldo**
  **20133 Milano (IT)**

(74) Representative: **Benvenuti, Federica et al**
**Solvay S.A.**
**Département de la Propriété Intellectuelle**
**Rue de Ransbeek, 310**
**1120 Bruxelles (BE)**

(54) **Method for manufacturing polyethersulfone membrane**

(57) The invention pertains to a method for manufacturing a polyethersulfone membrane comprising the steps of:
(i) preparing a polyethersulfone solution [solution (SP)] comprising:
- at least one polyethersulfone [polymer (P)];
- a solvent mixture [mixture (M)] comprising an amount exceeding 50 % wt of N,N-dimethylmethoxyacetamide, with respect to the total weight of the mixture (M);
(ii) processing said solution (SP) into a film;
(iii) immersing said film in a non-solvent bath.

EP 2 926 889 A1

## Description

### Technical Field

The present invention relates to a method for the manufacture of polyethersulfone membranes. In particular the invention relates to a method comprising using certain polyethersulfone solutions.

### Background Art

Aromatic polysulfones having para-linked diphenylenesulfone group as part of their backbone repeat units are a class of thermoplastic polymers characterized by high glass-transition temperatures, good mechanical strength and stiffness, and outstanding thermal and oxidative resistance. By virtue of their mechanical, thermal, and other desirable characteristics, these polymers enjoy an increasingly wide and diversified range of commercial applications, including notably coatings and membranes for wide field of use.

Manufacturing techniques for industrial production of membranes generally include the preparation of solutions of sulfone polymers in suitable solvents. According to these techniques, a clear polymer solution is precipitated into two phases: a solid, polymer-rich phase that forms the matrix of the membrane, and a liquid, polymer-poor phase that forms the membrane pores. Polymer precipitation from a solution can be achieved in several ways, such as cooling, solvent evaporation, precipitation by immersion in water, or imbibition of water from the vapor phase. If precipitation is rapid, the pore-forming liquid droplets tend to be small and the membranes formed are markedly asymmetric. If precipitation is slow, the pore-forming liquid droplets tend to agglomerate while the casting solution is still fluid, so that the final pores are relatively large and the membrane structure is more symmetrical.

In these techniques, it remains nevertheless key to provide for stable and homogeneous solutions of polymer, as starting material.

The vast majority of aromatic sulfone-based polymers can be readily dissolved in certain highly polar solvents and certain chlorinated solvents to form stable solutions. These powerful solvents include N-methylpyrrolidone (NMP), N, N-dimethylacetamide (DMAc), pyridine, and aniline, 1,1,2-trichloroethane and 1,1,2,2-tetrachloroethane.

Pyridine, aniline and chlorinated solvents are less desirable because of their potentially harmful health effects.

With regards to NMP and DMAc, which have been since years the solvents of choice in the industry for solution-based hollow-fiber spinning processes in the manufacture of polysulfone asymmetric membranes, these solvents are now focusing environmental and safety concerns, having regards to the safety risks associated to their handling and to possible leakage/emissions in the environment, so questing for substitution.

For instance, NMP has been notably classified according to the European regulation (EC) No1272/2008 in the hazard class Repr.1B code H360D (may damage the unborn child), Eye Irrit.2 code H319, STOT SE 3 code H335, Skin Irrit.2 H315 and according to the European directive 67/548/EEC it is classified as Reprotoxic Cat2 code R61, Xi codes R36/37/38. Further more it is submitted to the Toxic Release Inventory (SARA Title III Section 313).

Similarly, DMAc N,N-Dimethylacetamide is covered by index number 616-011-00-4 of Regulation (EC) No 1272/2008 in Annex VI, part 3, Table 3.1 (the list of harmonised classification and labelling of hazardous substances) as toxic for reproduction category 1B (H360D: "May damage the unborn child"). The corresponding classification in Annex VI, part 3, Table 3.2 (the list of harmonised and classification and labelling of hazardous substances from Annex I to Directive 67/548/EEC) of Regulation (EC) No 1272/2008 is toxic for reproduction category 2 (R61:"May cause harm to the unborn child").

The present invention thus provides a solution for obviating to environmental and safety concerns which arise in using NMP, DMAc or other similar solvents and provides an alternative method for manufacturing membranes.

US 20120065284 (CANON KABUSHIKI KAISHA) 15.03.2012 discloses a method of producing a porous polymer film, the method comprising forming a film of a solution containing a polymer constituting a porous polymer film; bringing a sheet, that selectively absorbs a solvent in the solution rather than a solute in the solution, into contact with the film; and making the porous film after the contact with the sheet. Among solvents for the polymer solution used therein, mention is made notably, in a long list of N,N-dimethylmethoxyacetamide. The polymer of the polymer film is formed from one or more of polyimide, polyamideimide, polyamide, polyetheramide, polysulfone, and polyethersulfone.

Nevertheless, the selection of an alternative solvent for the manufacture of membranes of sulfone polymers is not an easy task, because these polymers might be found not to readily solubilize in certain polar solvents: while models and theories are often proposed for predicting solubility behaviour, the experimental findings are often diverging, and, within the frame of sulfone polymers, divergences are often observed.

Summary of invention

The invention thus pertains to a method for manufacturing a polyethersulfone membrane comprising the steps of:

(i) preparing a polyethersulfone solution [solution (SP)] comprising:

- at least one polyethersulfone [polymer (P)];
- a solvent mixture [mixture (M)] comprising an amount exceeding 50 % wt of N,N-dimethylmethoxyacetamide, with respect to the total weight of the mixture (M);

(ii) processing said solution (SP) into a film;
(iii) immersing said film in a non-solvent bath.

The Applicant has found that the solvent mixture comprising major amount of N,N-dimethylmethoxyacetamide, in addition of possessing a totally positive environmental profile, with no environmental nor toxicological concerns, is effective in providing polyethersulfone solutions suitable for the manufacture of membranes.

This finding is particularly surprising, in view of the fact that N,N-dimethylmethoxyacetamide is notably not effective for the manufacture of polysulfone membranes.

This and other objects, advantages, and features of the invention will be more readily understood and appreciated by reference to the detailed description of the invention.

The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane).

Porous membranes are generally characterized by the average pore diameter and the porosity, i.e. the fraction of the total membrane that is porous.

Membranes having a uniform structure throughout their thickness are generally known as symmetrical membranes, which can be either dense or porous; membranes having pores which are not homogeneously distributed throughout their thickness are generally known as asymmetric membranes. Asymmetric membranes are characterized by a thin selective layer (0.1-1 μm thick) and a highly porous thick layer (100-200 μm thick) which acts as a support and has little effect on the separation characteristics of the membrane.

Membranes can be in the form of a flat sheet or in the form of tubes. Tubular membranes are classified based on their dimensions in tubular membranes having a diameter greater than 3 mm; capillary membranes, having a diameter comprised between 0.5 mm and 3 mm; and hollow fibers having a diameter of less than 0.5 mm. Oftentimes capillary membranes are also referred to as hollow fibres.

Flat sheet membranes are generally preferred when high fluxes are required whereas hollow fibres are particularly advantageous in applications where compact modules with high surface areas are required.

Depending on their applications membranes may also be supported to improve their mechanical resistance. The support material is selected to have a minimal influence on the selectivity of the membrane.

The solution (SP) comprises polymer (P) and a mixture of solvents [mixture (M)].

The term "solvent" is used herein in its usual meaning, that is it indicates a substance capable of dissolving another substance (solute) to form an uniformly dispersed mixture at the molecular level. In the case of a polymeric solute it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates.

The mixture (M) may comprise, possibly in addition to N,N-dimethylmethoxyacetamide, at least one further solvent.

If used, the amount of said further solvent is lower than the amount of N,N-dimethylmethoxyacetamide. Still, the amount of said further solvent, when present, is preferably lower than 25 % wt, preferably lower than 20 % wt, more preferably lower than 15 % wt, even more preferably lower than 10 % wt, with respect to the total weight of mixture (M).

Exemplary embodiments of further solvents which may be used in the mixture (M) of the composition of the present invention include notably:

- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane ; monochlorobenzene, 1,2-dichlorobenzene, 1,3-dichlorobenzene, 1,4-dichlorobenzene, 1,2,4-trichlorobenzene or mixture of different chlorobenzenes;

- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols such as methyl alcohol, ethyl alcohol, diacetone alcohol;
- ketones such as acetone, methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, $\gamma$-butyrolactone;
- linear or cyclic carboxamides such as N,N-dimethylacetamide (DMAC), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- ureas such as tetramethylurea, tetraethylurea.

For embodiments wherein the mixture (M) comprises a further solvent, mixture (M) is preferably free from solvents qualified as Carcinogenic, Mutagenic or Toxic to Reproduction according to chemical safety classification (CMR solvents); more specifically, the mixture (M) is advantageously substantially free from NMP, DMF and DMAC.

Nevertheless, mixtures (M) substantially free from any further solvent different from N,N-dimethylmethoxyacetamide, i.e. consisting essentially of N,N-dimethylmethoxyacetamide are those preferred.

Minor amount of impurities, solvent traces and residues might be present in the mixture (M) beside N,N-dimethylmethoxyacetamide, without these affecting the properties of the mixture (M). A total amount of said other components up to about 1 % wt, based on the total weight of mixture (M) is generally tolerated.

Preferably, the composition of the invention comprises only one polymer (P).

For the purpose of the invention, the expression "polyethersulfone" and "polymer (P)" is intended to denote any polymer, at least 50 % moles of the recurring units thereof comply with formula (I) [recurring units ($R_{PESU}$ )]:

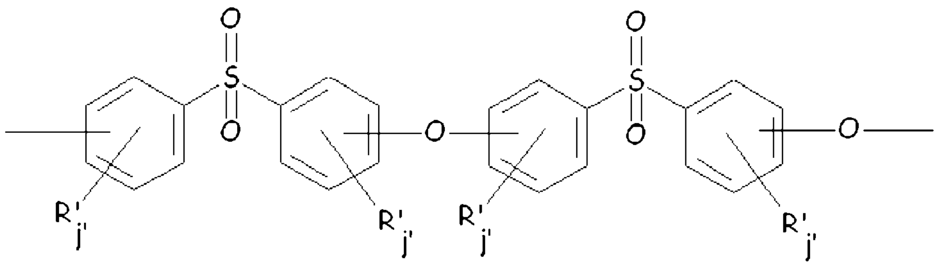

formula (I)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- each of j', equal to or different from each other and at each occurrence, is independently zero or is an integer from 0 to 4 .

Preferred recurring units ($R_{PESU}$) are those complying with formula (II), shown below :

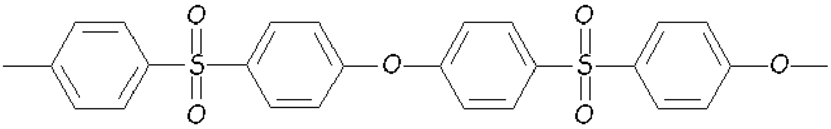

formula (II).

The polymer (P) may be notably a homopolymer, or a copolymer such as a random or a block copolymer. When the polymer (P) is a copolymer, its recurring units are advantageously a mix of recurring units ($R_{PESU}$), as above detailed, and of recurring units ($R_{PESU}$*). These recurring units (R $_{PESU}$*) can notably be selected from the group consisting of those of formulae (III), (IV) and (V) herein below :

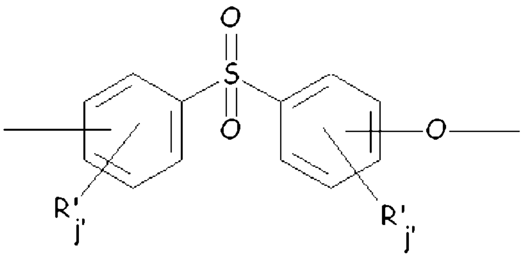

formula (III);

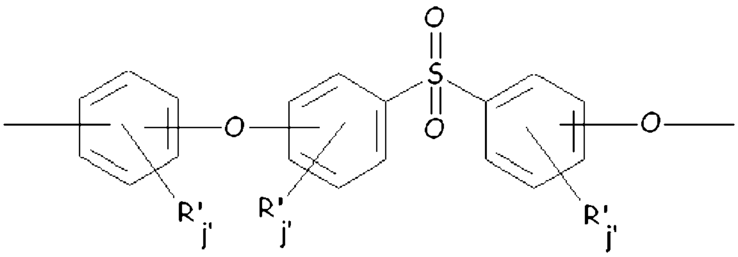

formula (IV);

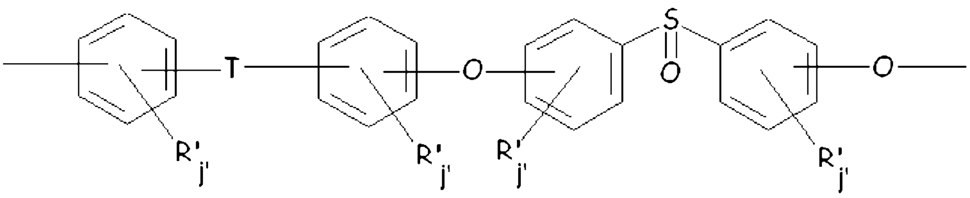

formula (V);

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- each of i', equal to or different from each other and at each occurrence, is independently zero or is an integer from 0 to 4 ;
- each of T, equal to or different from each other, is selected from the group consisting of a bond, $-CH_2-$ ; -O- ; -S- ;-C(O)- ; $-C(CH_3)_2-$ ; $-C(CF_3)_2$
- ;
- $C(=CCl_2)$-; $-C(CH_3)(CH_2CH_2COOH)-$ ;-N=N- ; $-R^aC=CR^b-$ ; where each $R^a$ and $R^b$ ; independently of one another,

is a hydrogen or a $C_1$-$C_{12}$-alkyl, $C_1$-$C_{12}$-alkoxy, or $C_6$-$C_{18}$-aryl group ; $-(CH_2)_q-$ and $-(CF_2)_q-$ with q = integer from 1 to 6, or an aliphatic divalent group, linear or branched, of up to 6 carbon atoms ; and mixtures thereof.

Specific recurring units ($R_{PESU}$*) can notably be selected from the group consisting of those of formula (A), (B) and (C) herein below :

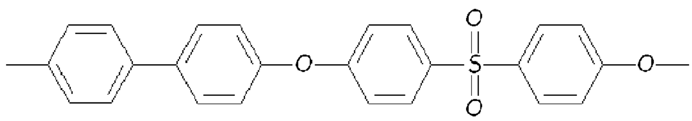 (A)

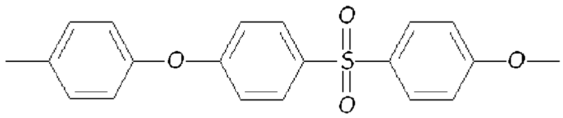 (B)

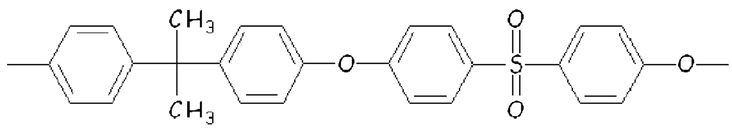 (C)

and mixtures thereof.

The polymer (P) can also be a blend of the previously cited homopolymer and copolymer.

Preferably more than 75 % by moles, preferably more than 85 % by moles, preferably more than 95 % by moles, preferably more than 99 % by moles of the recurring units of the polymer (P) are recurring units ($R_{PESU}$), as above detailed.

Most preferably all the recurring units of the polymer (P) are recurring units recurring units ($R_{PESU}$), as above detailed, chain defects, or very minor amounts of other units might be present, being understood that these latter do not substantially modify the properties.

A polymer (P) being a homopolymer of recurring units of formula (II), as above detailed, is notably available as VERADEL® PESU from Solvay Specialty Polymers USA, L.L.C.

Polymers (P) can be prepared by known methods.

The polymer (P) has advantageously a melt flow rate (MFR) equal to or higher than 4 g/10 min at 380°C and under a load of 2.16 kg, preferably equal to or higher than 7 g/10 min at 380°C and under a load of 2.16 kg, more preferably equal to or higher than 10 g/10 min at 380°C and under a load of 2.16 kg, as measured in accordance with ASTM method D1238 ; to measure said melt flow rate, a Tinius Olsen Extrusion Plastometer melt flow test apparatus can be used.

Upper boundary for the melt flow rate of the polymer (P) is not critical and will be selected by the skilled in the art as a matter of routine work. It is nevertheless understood that the polymer (P) advantageously possesses a melt flow rate of at most 100 g/10 min, preferably at most 80 g/10 min, more preferably at most 70 g/10 min, still more preferably at most 60 g/10 min, most preferably at most 50 g/10 min, when measured in accordance with ASTM method D1238 at 380°C and under a load of 2.16 kg.

According to certain embodiments, the polymer (P) advantageously has a melt flow rate of 50 g/10 min or less, preferably of 40 g/10 min or less at 380°C and under a load of 2.16 kg, preferably of 25 g/10 min or less at 380°C and under a load of 2.16 kg : in other words, the polymer (P) of this embodiment will have a melt flow rate, measured as above detailed, ranging from at least 4 g/10 min to 50 g/10 min or less, preferably ranging from at least 15 g/10 min to 40 g/10 min or less, at 380°C and under a load of 2.16 kg.

VERADEL® A-201 NT PESU and VERADEL® A-301 NT PESU are examples of polymers (P) suitable for being used in this embodiment.

The VERADEL® PESU weight average molecular weight can be 20,000 to 100,000 grams per mole (g/mol) as determined by gel permeation chromatography using ASTM D5296 with polystyrene standards. In some embodiments the VERADEL® PESU weight average molecular weight can be 40,000 to 80,000 grams per mole (g/mol).

According to certain specific embodiments, the polymer (P) can be functionalized with at least one functional group.

For the purpose of the present invention, the functional group may be bound to atoms of the polymer chain, as a side chain group [side group] or may be present as end group of the polymer chain [end group]. Preferably, the functional group is a functional end group.

The functional group in the polymer (P) is preferably selected from the group consisting of hydroxyl, in particular phenolic OH, and carboxyl group (generally of formula -COOA where A is hydrogen or an alkali metal).

If present, the functional group in the polymer (P) is most preferably a phenol OH group.

According to these embodiments, the polymer (P) has advantageously a number of phenol OH groups being equal to or more than 10 μeq/g, preferably equal to or more than 20 μeq/g, more preferably equal to or more than 30 μeq/g, even more preferably equal to or less more than 50 μ eq/g.

Upper boundary for the number of phenol OH group of the polymer (P) is not critical and will be selected by the skilled in the art as a matter of routine work. It is nevertheless understood that the polymer (P) has advantageously a number of phenol OH groups being equal to or less than 400 μeq/g, preferably equal to or less than 300 μeq/g, more preferably equal to or less than 200 μeq/g, even more preferably equal to or less than 100 μeq/g.

Analytical methods can be used for the determination of the total number of functional groups in the polymer (P), including notably titration methods, spectroscopic measurements such as IR and NMR or radioactive measurements such as for polymers with labeled end-groups.

Preferably, the total number of phenol OH groups in the polymer (P) is suitably determined by a titration method, preferably a potentiometric titration method.

For the determination of the total number of phenol OH groups, a base is suitably used as titrant. Suitable bases are in general those having a $K_b$ value equal to at least 1000 times greater than the $K_b$ value of the de-protonated carboxyl end group. A suitable base is notably tetrabutylammonium hydroxide in a mixture of toluene and methanol.

The base is in general dissolved in an organic solvent. The organic solvent to be used may, for example, be toluene, dimethyl formamide, dimethyl acetamide, dimethylsulfoxide, sulfolane, tetrahydrofuran, acetonitrile, dioxane, methanol, ethanol and mixture thereof.

The methods for manufacturing functionalized polymers (P) are well known in the art and include notably conducting the reaction with excess of the Bisphenol S monomer.

For example, a polymer commercialized by Solvay Specialty Polymers USA, L.L.C. as VERADEL® 3600RP functionalized polyethersulfones (r-PESU) complies with this criterion.

Other examples of functionalized polyethersulfones (r-PESU) polymers commercialized by Solvay Specialty Polymers USA, L.L.C. complying with this criterion are notably Virantage® 10200, Virantage® 10300, and Virantage® 10700 functionalized polyethersulfones (r-PESU).

The polyethersulfone solution [solution (SP)] can be prepared in step (i) by any conventional manner. For instance, the mixture (M) can be added to the polymer (P), or, preferably, the polymer (P) can be added to the mixture (M), or even the polymer (P) and the mixture (M) can be simultaneously combined.

The solution (SP) is prepared at a temperature of advantageously at least 25°C, preferably at least 30°C, more preferably at least 40°C and even more preferably at least 50°C. The solution (SP) is prepared at a temperature of advantageously less than 180°C, preferably less than 170°C, more preferably less than 160°C, and even more preferably less than 150°C. Higher temperatures can of course be used for the solution (SP) preparation step (i), however they are not preferred from a practical and/or economical point of view.

The overall concentration of the polymer (P) in the solution (SP) should be at least 10% by weight, preferably at least 12% by weight, based on the total weight of the solution. Typically the concentration of the polymer (P) in the solution does not exceed 50% by weight, preferably it does not exceed 40% by weight, more preferably it does not exceed 30% by weight, based on the total weight of the solution (SP).

The solution (SP) may contain additional components, such as pore forming agents, nucleating agents, fillers and the like. Suitable pore forming agents are for instance polyvinylpyrrolidone (PVP), and polyethyleneglycol (PEG), with PVP being preferred. When added to the solution (SP) in amounts typically ranging from 0.1 to 5% by weight, preferably from 0.5 to 3% by weight, transparent homogeneous solutions are obtained. Pore forming agents are generally at least partially, if not completely, removed from the membrane in the non-solvent bath in step (iii).

The mixing time required to obtain the solution (SP) can vary widely depending upon the rate of solution of the components, the temperature, the efficiency of the mixing apparatus, the viscosity of the solution (SP) being prepared, and the like. Any suitable mixing equipment may be used. Preferably, the mixing equipment is selected to reduce the amount of air entrapped in the solution (SP) which may cause defects in the final membrane. The mixing of the polymer (P) and the mixture (M) may be conveniently carried out in a sealed container, optionally held under an inert atmosphere. Inert atmosphere, and more precisely nitrogen atmosphere has been found particularly advantageous for the preparation of solution (SP) comprising PVP.

In general the solubility of the polymer (P) in the solvent mixture (M) at the temperature of the solution during the step (ii) of the method of the invention should be greater than 10% by weight, preferably greater than 12% by weight, more preferably greater than 15% by weight, with respect to the total weight of the solution.

The term "solubility" is defined herein as the maximum amount of polymer, measured in terms of weight of the polymer per weight of solution, which dissolves at a given temperature affording a transparent homogeneous solution without the presence of any phase separation in the system.

Further in addition, a limited amount of a non-solvent for polymer (P) may be added to solution (SP) obtained in step (i), in an amount generally below the level required to reach the cloud point (less than 40 % wt, preferably less than 25 % wt, based on the weight of solution (SP). Such non-solvent will be generally the same as the one used in step (iii) of the process. Non-solvent will thus be described in step (iii) below. Without being bound by this theory, it is generally understood that the addition of an amount of non-solvent in solution (SP) will increase the rate of demixing/coagulation in step (iii), so as to provide a more advantageous membrane morphology.

Once a homogenous and transparent solution (SP) is prepared, the solution (SP) is processed into a film.

The term "film" is used herein to refer to the layer of solution (SP) obtained after the processing of the same. Depending on the final form of the membrane the film may be either flat, when flat membranes are required, or tubular in shape, when tubular or hollow fiber membranes are to be obtained.

The temperature of the solution during the processing step (ii) may be or may be not the same as the temperature during the solution preparation step (i). The temperature of the solution during the processing step (ii) typically does not exceed 180°C, preferably it does not exceed 170°C, more preferably it does not exceed 160°C, even more preferably it does not exceed 150°C.

During the processing step (ii) the solution (SP), lower boundary for the processing temperature are not critical, provided that the solution (SP) still maintains adequate solubility and viscosity properties. Ambient temperature can be notably used.

The viscosity of the solution (SP) at the temperature of the processing step (ii) is typically at least 1 Pa.s. The viscosity of the solution (SP) in said conditions typically does not exceed 100 Pa.s.

Conventional techniques can be used for processing the solution (SP) into a film, being understood that casting techniques are preferred.

Different casting techniques are used depending on the final form of the membrane to be manufactured. When the final product is a flat membrane the polymer solution is cast as a film over a flat support, typically a plate, a belt or a fabric, or another microporous supporting membrane, by means of a casting knife or a draw-down bar.

Accordingly, in its first embodiment the method of the invention comprises a step (ii) of casting the solution (SP) into a flat film on a support.

Hollow fibers and capillary membranes can be obtained by the so-called wet-spinning process. In such a process the solution (SP) is generally pumped through a spinneret, that is an annular nozzle comprising at least two concentric capillaries: a first outer capillary for the passage of the solution (SP) and a second inner one for the passage of a supporting fluid, generally referred to as "lumen". The lumen acts as the support for the casting of the solution (SP) and maintains the bore of the hollow fiber or capillary precursor open. The lumen may be a gas, or, preferably, a liquid at the conditions of the spinning of the fiber. The selection of the lumen and its temperature depends on the required characteristics of the final membrane as they may have a significant effect on the size and distribution of the pores in the membrane. In general the lumen is not a strong non-solvent for the polymer (P) or, alternatively, it contains a solvent or weak solvent for the polymer (P). The lumen is typically miscible with the non-solvent and with the solvent for the polymer (P). The temperature of the lumen generally approximates the temperature of the solution (SP).

At the exit of the spinneret, after a short residence time in air or in a controlled atmosphere, the hollow fiber or capillary precursor is immersed in the non-solvent bath wherein the polymer precipitates forming the hollow fiber or capillary membrane.

Accordingly, in its second embodiment the process of the invention comprises a step (ii) of casting the polymer solution into a tubular film around a supporting fluid.

The casting of the polymer solution is typically done through a spinneret. The supporting fluid forms the bore of the final hollow fiber or capillary membrane. When the supporting fluid is a liquid, immersion of the fiber precursor in the non-solvent bath also advantageously removes the supporting fluid from the interior of the fiber.

Tubular membranes, because of their larger diameter, are produced using a different process from the one employed for the production of hollow fiber membranes.

In its third embodiment the process of the invention comprises a step (ii) of casting the polymer solution into a tubular film over a supporting tubular material.

After the processing of the solution (SP) has been completed so as to obtain a film, in whichever form, as above detailed, said film is immersed into a non-solvent bath in step (iii). This step is generally effective for inducing the precipitation of the polymer (P) from the solution (SP). The precipitated polymer (P) thus advantageously forms the final membrane structure.

As used herein the term "non-solvent" is taken to indicate a substance incapable of dissolving a given component of a solution or mixture.

Suitable non-solvents for the polymer (P) are water and aliphatic alcohols, preferably, aliphatic alcohols having a short chain, for example from 1 to 6 carbon atoms, more preferably methanol, ethanol and isopropanol. Blends of said preferred non-solvents, i.e. comprising water and one or more aliphatic alcohols can be used. Preferably, the non-solvent of the non-solvent bath is selected from the group consisting of water, - aliphatic alcohols as above defined, and mixture

thereof. Further in addition, the non-solvent bath can comprise in addition to the non-solvent (e.g. in addition to water, to aliphatic alcohol or to mixture of water and aliphatic alcohols, as above detailed) small amounts (typically of up to 40 % wt, with respect to the total weight of the non-solvent bath, generally 25 to 40 % wt)) of a solvent for the polymer (P). Use of solvent/non-solvent mixtures advantageously allows controlling the porosity of the membrane. The non-solvent is generally selected among those miscible with the mixture (M) used for the preparation of the solution (SP). Preferably the non-solvent in the process of the invention is water. Water is the most inexpensive non-solvent and it can be used in large amounts. The mixture (M) is advantageously miscible and soluble in water, which is an additional advantage of the method of the present invention.

The non-solvent in the precipitation bath is usually held at a temperature of at least 0°C, preferably of at least 15°C, more preferably of at least 20°C. The non-solvent in the precipitation bath is usually held at a temperature of less than 90°C, preferably of less than 70°C, more preferably of less than 60°C.

The temperature gradient between the cast film and the non-solvent bath may influence the pore size and/or pore distribution in the final membrane as it affects the rate of precipitation of the polymer (P) from the solution (SP). If precipitation is rapid, a skin will generally form on the surface of the cast film in contact with the non-solvent which will typically slow down the diffusion of the non-solvent in the bulk of the polymer solution leading to a membrane with an asymmetric structure. If precipitation is slow, the pore-forming liquid droplets of the solvent-rich liquid phase, which forms upon contact with the non-solvent, usually tend to agglomerate while the polymer solution is still fluid. As a consequence the membrane will have a more homogeneous, symmetrical structure. The appropriate temperature of the non-solvent bath can be determined for each specific case with routine experiments.

Once removed from the precipitation bath the membrane may undergo additional treatments, for instance rinsing. As a last step the membrane is typically dried.

The invention further pertains to a membrane obtained by the method as above described.

The membrane obtained from the process of the invention is preferably a porous membrane. Typically the membrane has an asymmetric structure. The porosity of the membrane may range from 3 to 90%, preferably from 5 to 80%.

The pores may have an average diameter of at least 0.001 μm, of at least 0.005 μm, of at least 0.01 μm, of at least 0.1 μm, of at least 1 μm, of at least 10 μm and of at most 50 μm. Suitable techniques for the determination of the average pore size in porous membranes are described for instance in "Membranes and Membrane Separation Processes", by H. Strathmann in "Ullmann's Encyclopedia of Industrial Chemistry", 7th edition, published by John Wiley & Sons, Inc. (DOI: 10.1002/14356007.a16_187.pub2).

The invention will be now described in more details with reference to the following examples, whose purpose is merely illustrative and not intended to limit the scope of the invention.

**Raw materials**

- PES-1 is VERADEL® 3000P, a polyethersulfone polymer commercially available from Solvay Specialty Polymers USA, LLC;
- PES-2 is ULTRASON® E 6020, a polyethersulfone polymer commercially available from BASF,
- PSU is UDEL® 3500P LCD MB8, a polysulfone commercially available under trade name UDEL® from Solvay Specialty Polymers USA, LLC;
- PVP is a polyvinylpyrrolidone polymer commercially available as K90 from BASF
- N,N-dimethylmethoxyacetamide (MAADA, herein after) purity 98%, available from Solvay.

**Solubility assessment**

An initial solubility study was carried out for assessing solubility of PES, as above detailed, in N,N-dimethylmethoxyacetamide, and compared with results obtained with NMP.

*Manufacture of Polymeric solutions*

Solutions were prepared with a concentration of PES-1 of 20% wt and a concentration of PVP of 5% in NMP or MAADA. Polymers and PVP were added under agitation at 500 rate/min in a beacker. The solutions were agitated with deflocculating paddle for several hours at room temperature in 100 ml beaker with stirrer IKA until complete dissolution of the components was achieved.

*Rheology evaluation of the Polymeric solutions*

Steady-shear Viscosity measurements were performed with a TA instruments AR 2000 constant-stress rheometer using a cone geometry with a 2° angle and 6 cm diameter cone. The temperature was controlled by a Peltier lower plate. Measurements were performed at temperature ranging from 25 to 60°C. The shear rate ranged from 0.1 to $300 s^{-1}$.

Results are summarized in table 1 below:

**Table 1**

| **Solvent** | **T(°C)** | **Time to dissolut ion at 25°C** | **Viscosity at to, 30°C, 10 -1s (Pa.s)** | **Viscosity at 30 days, 30°C, 10 -1s** |
|---|---|---|---|---|
| NMP | 25 | 1h00 | 22 | 11 |
| MAADA | 25 | 1h00 | 28 | 32 |

**General procedure for the manufacture of the solution of polyethersulfone for membrane manufacture.**

Polymer solutions were prepared with different concentration of the polymers (15-25% w/w) in NMP or MAADA. In certain cases, PVP was also used. Polymer ingredient(s) were added under agitation in the first 60 seconds of the dissolution procedure. The solutions were agitated for several hours at a temperature of 65°C in 100 ml closed bottles with magnetic stirrer until complete dissolution of the components was achieved. The polymeric dope were left under agitation at room temperature overnight and then ultra-sonicated for 30 min at 40°C before being possibly used for membranes manufacture. Table 2 summarizes the obtained data.

**Table 2**

| Run | Polymer | PVP | NMP | DAAMA | ***Vt0**** | ***Vt1***** |
|---|---|---|---|---|---|---|
| | (% wt) | (% wt) | (% wt) | (% wt) | ***(cPoise)*** | ***(cPoise)*** |
| ***Comparative Tests with PSU*** | | | | | | |
| 1C | 15 | 0 | 85 | 0 | ***490*** | ***490*** |
| 2C | 20 | 0 | 80 | 0 | *2160* | *2200* |
| 3C | 25 | 0 | 75 | 0 | *8550* | ***8520*** |
| 4C | 15 | 0 | 0 | 85 | ***insoluble*** | ***insoluble*** |
| 5C | 20 | 0 | 0 | 80 | ***insoluble*** | ***insoluble*** |
| 6C | 25 | 0 | 0 | 75 | ***insoluble*** | ***insoluble*** |
| **Tests with PES-2** | | | | | | |
| 7C | 20 | 0 | 80 | 0 | ***1745*** | **1780** |
| 8C | 20 | 5 | 75 | 0 | ***21660*** | **28750** |
| 9C | 25 | 0 | 75 | 0 | ***7040*** | **6950** |
| 10 | 20 | 0 | 0 | 80 | ***2610*** | ***2560*** |
| 11 | 20 | 5 | 0 | 75 | ***52200*** | ***50000*** |
| 12 | 25 | 0 | 0 | 75 | ***10830*** | ***11120*** |
| *: V t0: viscosity of the solution, as measured immediately after preparation of the same; **: V t1: viscosity of the solution, as measured 25 days after preparation of the same, while maintaining solution at room temperature (25°C). | | | | | | |

PES was found to be soluble up to at least a concentration of 25% wt in N,N-dimethylmethoxyacetamide; solutions therefrom were found to remain stable against precipitation of the polymer, with substantially no change in their liquid viscosity. While liquid viscosity was found to be higher than in corresponding solutions in NMP, such difference was not of significance and yet viscosities in DAAMA were found to be within appropriate ranges for further processing into membranes.

On the other side, despite similarity of chemical structure, PSU was found to be insoluble in similar conditions,

and no composition of PSU in DAAMA was found to be suitable for further processing for the manufacture of membranes.

Because of this solubility behaviour, solvent mixtures based on N,N-dimethylmethoxyacetamide were found to be appropriate to manufacture polyethersulfone solutions suitable for further processing under the form of membranes, but not for the manufacture of polysulfone solutions and hence membranes.

**Procedure for casting a film and coagulating the membrane in a non-solvent bath**

Flat sheet porous membranes were prepared by filming the polymeric solution over a suitable smooth glass support by means of a automatized casting knife. Each trial is a flat sheet with dimensions 30x20 $cm^2$. Membrane casting was performed by holding polymer solutions, the casting knife and the support temperatures at 25°C. The Knife gap was set to 250 μm. After casting, polymeric films were immediately immersed in a coagulation bath in order to induce phase inversion. The coagulation bath consisted of pure de-ionized water. After coagulation the membranes were washed several times in the following days in order to remove residual traces of solvent.

**Permeability measurements**

Water flux (J) through each membrane at given pressure, is defined as the volume which permeates per unit area and per unit time. The flux is calculated by the following equation:

$$J = \frac{V}{A\,\Delta t}$$

where V (L) is the volume of permeate, A ($m^2$) is the membrane area, and Δt (h) is the operation time.

Water flux measurements were conducted at room temperature using a dead-end configuration <u>under a constant nitrogen pressure of 1 bar.</u> Membrane discs with an effective area of 11.3 $cm^2$ were cut from the items stored in water and placed on a metal plate. The thickness of each sample was measured using a digital caliper. For each material, flux and thickness shown in the graphs below are the average of at least three different discs.

**Porosity**

Membrane porosity ($\varepsilon_m$) was determined according to the gravimetric method, described in the literature (*see for example:* P. Sukitpaneenit, T. S. Chung, "Molecular elucidation of morphology and mechanical properties of PVDF hollow fiber membranes from aspects of phase in version, crystallization and rheology". Journal of Membrane Science 340 (2009) pp 192-205*).* Porosity is defined as the ratio between the volume of voids and the total volume occupied by the membrane. Perfectly dry membrane pieces were weighed and impregnated in isopropylic alcohol (IPA) for 24h; after this time, the excess of the liquid was removed with tissue paper, and membranes weight was measured again. Finally, from the dry and the wet weight of the sample, it is possible to evaluate the porosity of the membrane using the following formula:

$$\varepsilon(\%) = \frac{Ww - Wd/\rho w}{Ww - Wd/\rho w + (\frac{Wd}{\rho P})}\ x\ 100$$

wherein $W_w$ is the weight of the wet membrane, $W_d$ is the weight of the dry membrane, $\rho_w$ is the IPA density (0.785 $g/cm^3$) and ρp is the polymer density (assumed to be 1.37 $g/cm^3$ for PES). For all membranes types, at least three measurements were performed; then, average values and corresponding standard deviations were calculated.

**Bubble point determination**

Membranes bubble points, largest pore size and pore size distribution were determined following ASTM F316 method, using a Capillary Flow Porometer "Porolux 1000" (Porometer-Belgium). For each test, membranes samples were initially fully wetted using Fluorinert FC 43 (fluorinated fluid with a very low surface tension of 16 dyne/cm) for some hours and placed in the sample holder. Inert gas (nitrogen) was fed to the sample with increasing pressure. When it reached a point that exceeded the capillary force of the fluid within the largest pore, the first gas bubble passed through the membrane: this is referred as the bubble point (B.P.) and corresponds to the largest pore present in the membrane.

The measurement of bubble point is based on the Laplace's equation: $dp = 4 \gamma\cos\theta / DP$ where dp is the pore diameter, y is the surface tension of the liquid, $\theta$ is the contact angle of the liquid (assumed to be 0 in case of full wetting, which means $\cos\theta = 1$) and DP is the external applied pressure.

Results are summarized in Table 3 below.

**Table 3**

| Solution | Ingredients | | | Flux | Porosity | Bubble point | Thickness |
|---|---|---|---|---|---|---|---|
| | PES-2 | PVP | MAADA | ($L/(m^2xh)$) | (%) | (bar) | ($\mu$m) |
| 11 | 20 | 5 | 75 | 100 | 86.4 | >3 | 173 |

**Claims**

1. A method for manufacturing a polyethersulfone membrane comprising the steps of:

(i) preparing a polyethersulfone solution [solution (SP)] comprising:

- at least one polyethersulfone [polymer (P)], wherein said polymer (P) is a polymer, at least 50 % moles of the recurring units thereof comply with formula (I) [recurring units ($R_{PESU}$)]:

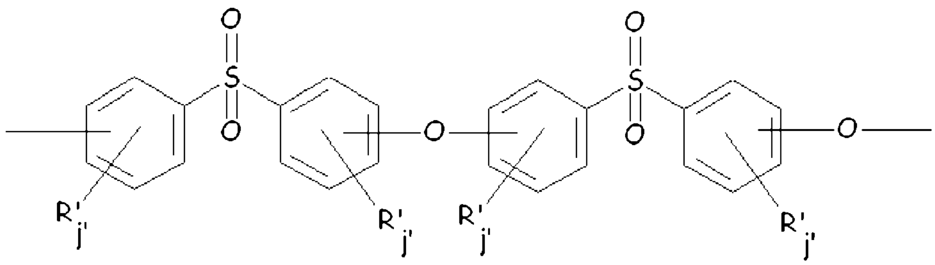

formula (I)

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- each of j', equal to or different from each other and at each occurrence, is independently zero or is an integer from 0 to 4 ;
- a solvent mixture [mixture (M)] comprising an amount exceeding 50 % wt of N,N-dimethylmethoxyacetamide, with respect to the total weight of the mixture (M);

(ii) processing said solution (SP) into a film;
(iii) immersing said film in a non-solvent bath.

2. The method of claim 1, wherein said mixture (M) comprises, in addition to N,N-dimethylmethoxyacetamide, at least one further solvent, generally selected from the group consisting of

- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane ; partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane ; monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutylether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols such as methyl alcohol, ethyl alcohol, diacetone alcohol;
- ketones such as acetone, methylethylketone, methylisobutyl ketone, diisobutylketone, cyclohexanone, isophorone;
- linear or cyclic esters such as : isopropyl acetate, n-butyl acetate, methyl acetoacetate, dimethyl phthalate, γ-butyrolactone;
- linear or cyclic carboxamides such as N,N-dimethylacetamide (DMAC), N,N-diethylacetamide, dimethylformamide (DMF), diethylformamide or N-methyl-2-pyrrolidinone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate;
- ureas such as tetramethylurea, tetraethylurea.

**3.** The method of claim 1, wherein mixture (M) consists essentially of N,N-dimethylmethoxyacetamide.

**4.** The method of anyone of the preceding claims, wherein said recurring units ($R_{PESU}$) are those complying with formula (II), shown below :

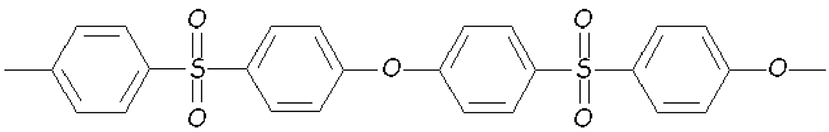

formula (II).

**5.** The method according to anyone of the preceding claims, wherein said polymer (P) is a copolymer, and wherein its recurring units are a mix of recurring units ($R_{PESU}$), as defined in claim 1, and of recurring units ($R_{PESU}$*), preferably selected from the group consisting of those of formulae (III), (IV) and (V) herein below :

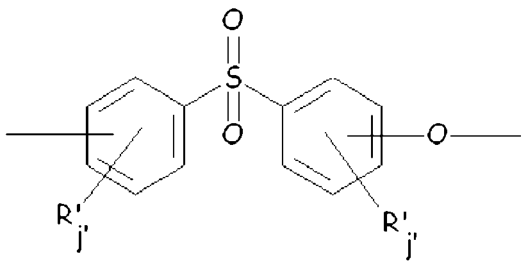

formula (III);

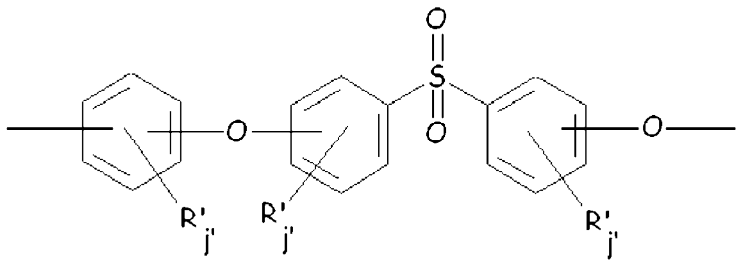

formula (IV);

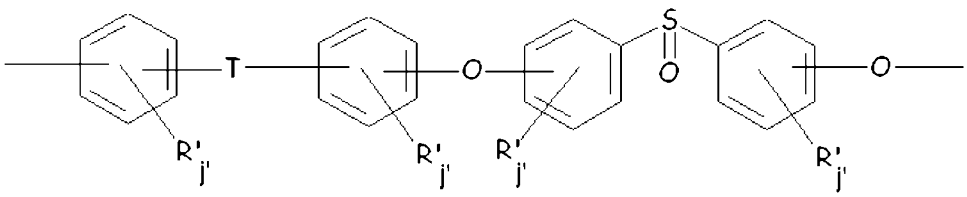

formula (V);

wherein:

- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- each of i', equal to or different from each other and at each occurrence, is independently zero or is an integer from 0 to 4 ;
- each of T, equal to or different from each other, is selected from the group consisting of a bond, $-CH_2-$ ; -O- ; -S- ;-C(O)- ; $-C(CH_3)_2-$ ; $-C(CF_3)_2-$ ;
- $C(=CCl_2)-$ ; $-C(CH_3)(CH_2CH_2COOH)-$ ;-N=N- ; $-R^aC=CR^b-$ ; where each $R^a$ and $R^b$ ; independently of one another, is a hydrogen or a $C_1$-$C_{12}$-alkyl, $C_1$-$C_{12}$
- alkoxy, or $C_6$-$C_{18}$-aryl group ; $-(CH_2)_q-$ and $-(CF_2)_q-$ with q = integer from 1 to 6, or an aliphatic divalent group, linear or branched, of up to 6 carbon atoms ;

and mixtures thereof.

**6.** The method of anyone of claims 1 to 5, wherein more than 75 % by moles, preferably more than 85 % by moles, preferably more than 95 % by moles, preferably more than 99 % by moles of the recurring units of the polymer (P) are recurring units ($R_{PESU}$), as defined in claim 1.

**7.** The method of anyone of claims 1 to 6, wherein the polyethersulfone solution [solution (SP)] is prepared at a temperature of advantageously at least 25°C, preferably at least 30°C, more preferably at least 40°C and even more preferably at least 50°C.

**8.** The method according to anyone of the preceding claims, wherein the overall concentration of the polymer (P) in the solution (SP) is of at least 10% by weight, preferably at least 12% by weight, based on the total weight of the solution.

**9.** The method of anyone of the preceding claims, wherein the solution (SP) contains one or more than one additional component, such as pore forming agents, nucleating agents, fillers and the like, preferably the solution (SP) comprises a pore forming agents selected from the group consisting of polyvinylpyrrolidone (PVP), and polyethyleneglycol (PEG).

**10.** The method according to anyone of the preceding claims, said method comprising a step (ii) of casting the solution (SP) into a flat film on a support.

**11.** The method according to anyone of claims 1 to 9, wherein said method comprises a step (ii) of casting the polymer solution (SP) into a tubular film around a supporting fluid.

**12.** The method according to anyone of claims 1 to 9, wherein said method comprises a step (ii) of casting the polymer solution (SP) into a tubular film over a supporting tubular material.

**13.** The method according to anyone of the preceding claims, wherein the non-solvent of the non-solvent bath is selected from the group consisting of water, aliphatic alcohols , and mixture thereof.

**14.** A membrane obtained by the method according to anyone of the preceding claims.

**15.** The membrane of claim 14, being a porous membrane.

Europäisches Patentamt
European Patent Office
Office européen des brevets

# EUROPEAN SEARCH REPORT

Application Number
EP 14 30 5492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 4 900 449 A (KRAUS MENAHAM [US] ET AL) 13 February 1990 (1990-02-13)<br>* examples 1-3 * | 14,15<br>1-15 | INV.<br>B01D67/00<br>B01D71/68<br>C08J5/22 |
| X<br>Y | EP 0 361 085 A1 (AKZO NV [NL]) 4 April 1990 (1990-04-04)<br>* examples 1,3 * | 14,15<br>1-15 | |
| X,D | US 2012/065284 A1 (SATO NAOTAKE [JP] ET AL) 15 March 2012 (2012-03-15)<br>* paragraph [0016] - paragraph [0018]; claims 1-3 * | 1-15 | |
| Y | LAU W W Y ET AL: "PHASE SEPARATION IN POLYSULFONE/SOLVENT/WATER AND POLYETHERSULFONE/SOLVENT/WATER SYSTEMS*", JOURNAL OF MEMBRANE SCIENCE, ELSEVIER, vol. 59, no. 2, 1 July 1991 (1991-07-01), pages 219-227, XP000248927, ISSN: 0376-7388, DOI: 10.1016/S0376-7388(00)81185-0<br>* the whole document * | 1-15 | |
| | | | TECHNICAL FIELDS SEARCHED (IPC) |
| | | | B01D<br>C08J |

The present search report has been drawn up for all claims

1

| Place of search | Date of completion of the search | Examiner |
|---|---|---|
| Munich | 15 September 2014 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 30 5492

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2014

| Patent document cited in search report | | Publication date | Patent family member(s) | | | Publication date |
|---|---|---|---|---|---|---|
| US 4900449 | A | 13-02-1990 | NONE | | | |
| EP 0361085 | A1 | 04-04-1990 | AU | 616793 | B2 | 07-11-1991 |
| | | | AU | 4099689 | A | 08-03-1990 |
| | | | DE | 3829752 | A1 | 22-03-1990 |
| | | | EP | 0361085 | A1 | 04-04-1990 |
| | | | ES | 2054960 | T3 | 16-08-1994 |
| | | | JP | 3068831 | B2 | 24-07-2000 |
| | | | JP | H02211231 | A | 22-08-1990 |
| | | | US | 4976859 | A | 11-12-1990 |
| US 2012065284 | A1 | 15-03-2012 | CN | 102803362 | A | 28-11-2012 |
| | | | EP | 2445956 | A1 | 02-05-2012 |
| | | | JP | 5430249 | B2 | 26-02-2014 |
| | | | JP | 2011006520 | A | 13-01-2011 |
| | | | US | 2012065284 | A1 | 15-03-2012 |
| | | | WO | 2010150794 | A1 | 29-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120065284 A

### Non-patent literature cited in the description

- Membranes and Membrane Separation Processes. **H. STRATHMANN.** Ullmann's Encyclopedia of Industrial Chemistry. John Wiley & Sons, Inc
- **P. SUKITPANEENIT ; T. S. CHUNG.** Molecular elucidation of morphology and mechanical properties of PVDF hollow fiber membranes from aspects of phase in version, crystallization and rheology. *Journal of Membrane Science,* 2009, vol. 340, 192-205